# EUROPEAN PATENT APPLICATION

(11) **EP 2 802 188 A1**
(43) Date of publication of application: **12.11.2014**
(21) Application number: 14163808.0
(22) Date of filing: 08.04.2014
(51) Int. Cl.: H04W 88/04, H04W 88/06

(54) **Apparatus and Method for Device to Device Communications**

(30) Priority: 09.04.2013 GB 201306351; 08.10.2013 US 201314048371; 16.12.2013 GB 201322169
(71) Applicant: General Dynamics C4 Systems, Inc., Scottsdale AZ 85257-3812 (US)
(72) Inventor: YOUNG, Philip A, Medstead, Hampshire GU34 5PF (GB); ZAKRZEWSKI, Robert, Bristol, BS15 8EB (GB)
(74) Representative: Optimus Patents Ltd

(57) **Abstract**

A terminal device for communicating in a cellular system is described. The terminal device comprises: at least one first transceiver arranged to communicate with a plurality of communication units; and at least one first signal processor, operably coupled to the at least one first transceiver and arranged to: communicate with a first communication unit in the cellular system in a first mode of operation when the terminal device is located within a coverage range of the at least one base station; and facilitate in a second mode of operation direct communications between at least one other terminal device and the first communication unit when the at least one other terminal device is located outside of the coverage range of the at least one base station.

## Description

### Field of the invention

The field of this invention relates to methods and apparatus for direct communications between devices outside of a network coverage area.

### Background of the Invention

A recent development in third generation (3G) wireless communications is the long term evolution (LTE) cellular communication standard, sometimes referred to as 4^{th} generation (4G) systems. Both of these technologies are compliant with third generation partnership project (3GPP™) standards. Irrespective of whether these LTE spectral allocations use existing second generation (2G) or 3G allocations being re-farmed for fourth generation (4G) systems, or new spectral allocations for existing mobile communications, they will be primarily paired spectrum for frequency division duplex (FDD) operation.

In these systems, user plane data is carried over intermediary nodes, which define the functions of an access network. In LTE, the access network, Evolved Universal Terrestrial Radio Access Network (E-UTRAN), generally comprises a network of evolved NodeBs (eNodeBs). The eNodeBs are generally inter-connected with each other by means of an interface known as X2, and to the Evolved Packet Core (EPC) by means of an S1 interface. Specifically, the access network is connected to the Mobility Management Entity (MME) via an S1-MME interface and to the Serving Gateway (S-GW) via an S1-U interface. The protocols that run between the eNodeBs and any UEs are known as the Access Stratum (AS) protocols. The E-UTRAN is responsible for all radio-related functions, for example, radio resource management, header compression, security, positioning and connectivity to the EPC.

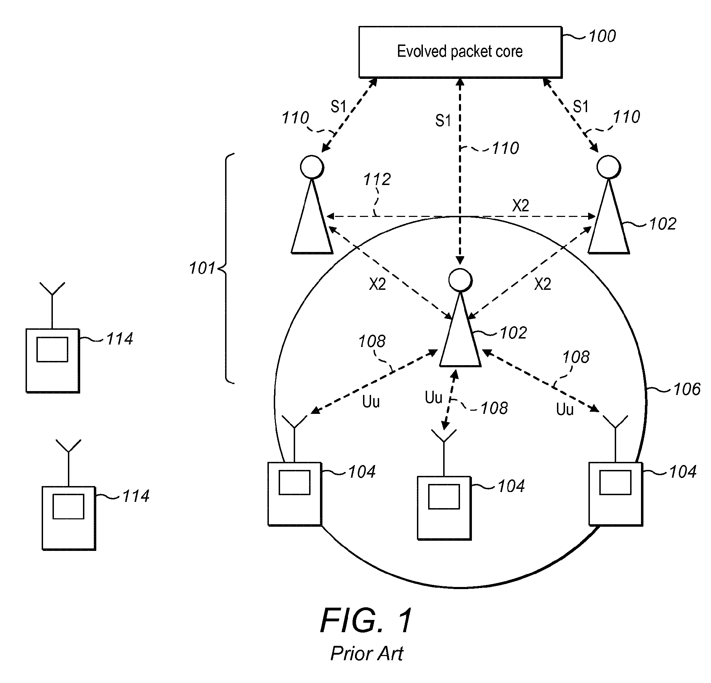

Referring to FIG. 1, an access network 101, defined by a number of inter-connected eNodeBs 102, is generally utilised when user equipment (UE) devices 104 are in a network's coverage area 106, thereby allowing UEs to communicate 108 with each other via the access network 101. Generally, the access network 101 communicates with EPC 100 via the S1 interface 110. eNodeBs 102 are operable to communicate with each other within the access network 101 via the X2 interface 112. In this example, UEs 104 are operable to communicate with each other via the Uu interface, otherwise known as the radio interface 108. In this example, access network 101 is utilised when UEs 104 are within the access network's 101 network coverage, allowing them to communicate with one another 108.

Generally, the access network 101 facilitates communication by receiving control plane (c-plane) data and user plane (u-plane) data from each eNodeB 102, and transmitting this control plane data and user plane data to the other eNodeBs 102 in the access network 101.

Different eNodeBs 102 within the access network 101 may utilise different receiving and transmitting frequencies, for example if Frequency Division Duplexing (FDD) is utilised. Further, different eNodeBs 102 within the access network 101 may utilise different waveforms, signal modulation and coding schemes between the different eNodeBs 102. Specifically, in a generic LTE system, E-UTRAN, the Uu radio interface 108 generally utilises Orthogonal Frequency Division Multiple Access (OFDMA) in the Downlink and Single Carrier Frequency Division Multiple Access (SC-FDMA) in the Uplink. OFDMA distributes subcarriers to different users (UEs) at the same time, allowing multiple users to be scheduled to receive data simultaneously. Generally, subcarriers are allocated in contiguous groups for simplicity and to reduce any overhead of indicating which subcarriers have been allocated to each user; however subcarriers groups allocated to a UE may also be non-contiguous. SC-FDMA is generally utilised in the Uplink case as it has a lower peak-to-average power ratio compared to OFDMA, which can benefit mobile terminal devices in terms of transmit power efficiency, for example. As discussed above, FDD may be utilised resulting in differing transmit and receive carrier frequencies. Further, Time Division Duplexing (TDD) may be utilised, resulting in separate outward and return signals.

A potential problem occurs when, for example, UEs 114 are outside of the access network's coverage 106, but where the UEs 114 may still be in relative proximity to each other. In the case of the prior art system in FIG. 1, UEs 114 cannot communicate with each other via the access network 101, as they are outside of the network's coverage 106 and cannot receive Uu signals 108. Further, UEs 114 cannot communicate directly with each other as their interfaces are incompatible. For example, UEs 114 may listen for connection establishment type signals, for example paging type messages, on different frequencies and/or may expect waveforms, modulation and coding in different formats.

Therefore, in some instance there may be a need to provide a system that may enable UEs that are outside of a network's coverage area 106, to be able to facilitate communication. In particular, there may be a need to facilitate communication between UEs in close proximity to each other that may be outside of the network's coverage area 106.

Based on the prior art system of FIG. 1, the above potential problem cannot be solved without a substantial complete redesign of the function of the Uu interface 108 and associated protocols utilised by prior art UEs for communication when inside the network's coverage area, to encompass when located outside of the coverage area.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified diagram of current E-UTRAN architecture as defined in the art.
FIG. 2 illustrates a simplified wireless communication system, in accordance with example embodiments of the invention.
FIG. 3 illustrates a simplified block diagram of a wireless communications unit adapted in accordance with some example embodiments of the present invention.
FIG. 4 illustrates a simplified wireless communication system, in accordance with some example embodiments of the invention.
FIG. 5 illustrates a simplified block diagram of operation of a wireless communication unit adapted in accordance with some example embodiments of the invention.
FIG. 6 illustrates an example of protocol layers within a wireless communications unit adapted in accordance with some example embodiments of the invention.
FIG. 7 illustrates a modified wireless communications unit adapted in accordance with some example embodiments of the invention.
FIG. 8 illustrates a further modified wireless communications unit adapted in accordance with some example embodiments of the invention.
FIG. 9 illustrates an example of a simplified flow chart in accordance with some example embodiments of the invention.
FIG. 10 illustrates an example of a typical computing system that may be employed to implement software controlled functions in accordance with some example embodiments of the invention.

### Detailed description

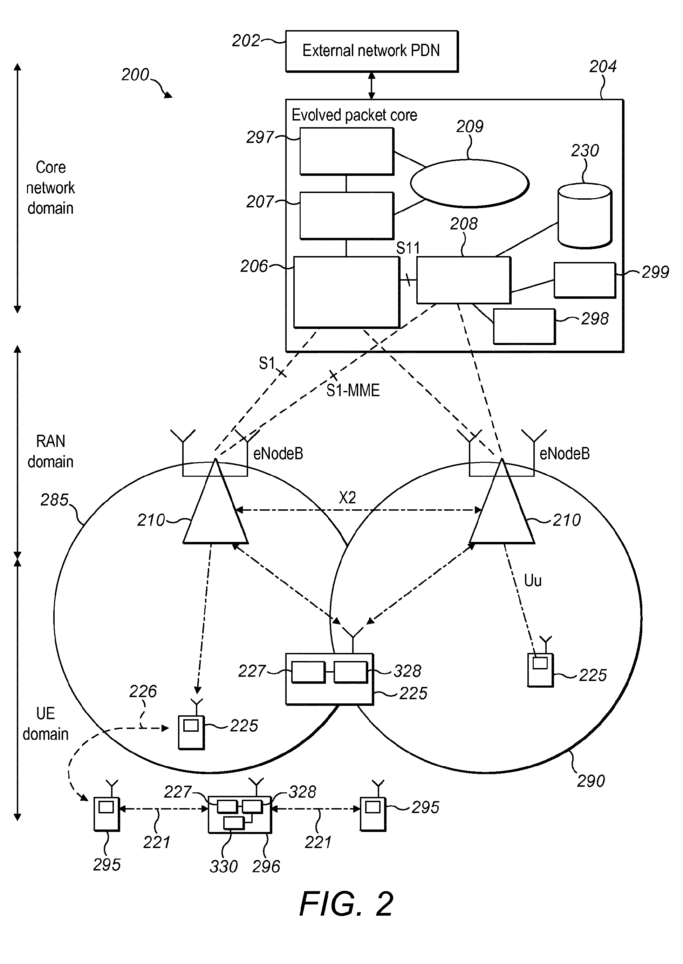

Referring now to FIG. 2, a wireless communication system 200 is shown in outline, in accordance with one example embodiment of the invention. In this example embodiment, the wireless communication system 200 is compliant with, and contains network elements capable of operating over, a universal mobile telecommunication system (UMTS™) air-interface. In particular, the embodiment relates to a system's architecture for an Evolved-UMTS Terrestrial Radio Access Network (E-UTRAN) wireless communication system, which is currently under discussion in the third Generation Partnership Project (3GPP™) specification for long term evolution (LTE), based around OFDMA (Orthogonal Frequency Division Multiple Access) in the downlink (DL) and SC-FDMA (Single Carrier Frequency Division Multiple Access) in the uplink (UL), as described in the 3GPP™ TS 36.xxx series of specifications. Within LTE, both time division duplex (TDD) and frequency division duplex (FDD) modes are defined.

The wireless communication system 200 architecture consists of radio access network (RAN) and core network (CN) elements 204, with the core network elements 204 being coupled to external networks 202 (named Packet Data Networks (PDNs)), such as the Internet or a corporate network. The CN elements 204 comprise a packet data network gateway (P-GW) 207. In order to serve up local content, the P-GW may be coupled to a content provider. The P-GW 207 may be further coupled to a policy control and rules function entity (PCRF) 297 and a Gateway 206.

The PCRF 297 is operable to control policy control decision making, as well as for controlling the flow-based charging functionalities in a policy control enforcement function PCEF (not shown) that may reside in the P-GW 207. The PCRF 297 may further provide a quality of service (QoS) authorisation class identifier and bit rate information that dictates how a certain data flow will be treated in the PCEF, and ensures that this is in accordance with a UE's 225 subscription profile.

In example embodiments, the Gateway 206 is a Serving Gateway (S-GW). The Gateway 206 is coupled to a mobility management entity MME 208 via an S11 interface. The MME 208 is operable to manage session control of Gateway bearers and is operably coupled to a home subscriber server (HSS) database 230 that is arranged to store subscriber communication unit 225 (user equipment (UE)) related information. As illustrated, the MME 208 also has a direct connection to each eNodeB 210, via an S1-MME interface.

The HSS database 230 may store UE subscription data such as QoS profiles and any access restrictions for roaming. The HSS database 230 may also store information relating to the P-GW 207 to which a UE 225 can connect. For example, this data may be in the form of an access point name (APN) or a packet data network (PDN) address. In addition, the HSS database 230 may hold dynamic information relating to the identity of the MME 208 to which a UE 225 is currently connected or registered.

The MME 208 may be further operable to control protocols running between the user equipment (UE) 225 and the CN elements 204, which are commonly known as Non-Access Stratum (NAS) protocols. The MME 208 may support at least the following functions that can be classified as functions relating to bearer management (which may include the establishment, maintenance and release of bearers), functions relating to connection management (which may include the establishment of the connection and security between the network and the UE 225) and functions relating to inter-working with other networks (which may include the handover of voice calls to legacy networks). The Gateway 206 predominantly acts as a mobility anchor point and is capable of providing internet protocol (IP) point-to-point (p2p) / unicast / multicast distribution of user plane data to eNodeBs 210. The Gateway 206 may receive content via the P-GW 207, from one or more content providers 209 or via the external PDN 202. The MME 208 may be further coupled to an evolved serving mobile location centre (E-SMLC) 298 and a gateway mobile location centre (GMLC) 299.

The E-SMLC 298 is operable to manage the overall coordination and scheduling of resources required to find the location of the UE that is attached to the RAN, in this example embodiment the E-UTRAN. The GMLC 299 contains functionalities required to support location services (LCS). After performing an authorisation, it sends positioning requests to the MME 208 and receives final location estimates.

The P-GW 207 is operable to determine or participate in determination of IP address allocation for a UE 225, as well as QoS enforcement and flow-based charging according to rules received from the PCRF 297. The P-GW 207 is further operable to control the filtering of downlink user IP packets into different QoS-based bearers (not shown). The P-GW 207 may also serve as a mobility anchor for inter-working with non-3GPP technologies such as CDMA2000 and WiMAX networks.

As the Gateway 206 comprises an S-GW, the eNodeBs 210 would be connected to the S-GW 206 and the MME 208 directly. In this case, all UE packets would be transferred through the S-GW 206, which may serve as a local mobility anchor for the data bearers when a UE 225 moves between eNodeBs 210. The S-GW 206 is also capable of retaining information about the bearers when the UE 225 is in an idle state (known as EPS connection management IDLE), and temporarily buffers downlink data while the MME 208 initiates paging of the UE 225 to re-establish the bearers (for example the bearers at the S1/Uu interfaces). In addition, the S-GW 206 may perform some administrative functions in the visited network, such as collecting information for charging (i.e. the volume of data sent or received from the UE 225). The S-GW 206 may further serve as a mobility anchor for inter-working with other 3GPP™ technologies such as GPRS™ and UMTS™.

As illustrated, the CN 204 is operably connected to two eNodeBs 210, with their respective coverage zones or cells 285, 290 and a plurality of UEs 225 receiving transmissions from the CN 204 via the eNodeBs 210. In accordance with example embodiments of the present invention, at least one eNodeB 210 and at least one UE 225 (amongst other elements) have been adapted to support the concepts hereinafter described.

The main component of the RAN is an eNodeB (an evolved NodeB) 210, which performs many standard base station functions and is connected to the CN 204 via an S1 interface and to the UEs 225 via a Uu interface. A wireless communication system will typically have a large number of such infrastructure elements where, for clarity purposes, only a limited number are shown in FIG. 2. The eNodeBs 210 control and manage the radio resource related functions for a plurality of wireless subscriber communication units/terminals (or user equipment (UE) 225 in 3GPP™ nomenclature). Each of the UEs 225 comprise a transceiver unit 227 operably coupled to signal processing logic 328 (with one UE illustrated in such detail for clarity purposes only). The system comprises many other UEs 225 and eNodeBs 210, which for clarity purposes are not shown. In this example, eNodeBs 210 may communicate with each other via an X2 interface.

In some examples, one or more UEs 295, 296 (with three UEs 295, 296 shown for clarity purposes only) may be located outside of the coverage zones of both cells 285, 290 of eNodeBs 210, but still be, relatively speaking, in close proximity to each other. In these examples, it may be advantageous for the UEs 295, 296 to be able to communicate with each other 221 without having to utilise the coverage zones or cells 285, 290 of eNodeBs 210. In some examples, UEs 295, 296 may communicate only with other UEs in close proximity to, but outside of the coverage zones or cells 285, 290. In other examples, UEs 295, 296 may additionally communicate with UEs 225 that are in close proximity to UEs 295, 296 and that are inside of the coverage zones or cells 285, 290. In this example only one UE, UE 296, has been modified in accordance with examples hereinafter described. In other examples, other UEs may also be modified.

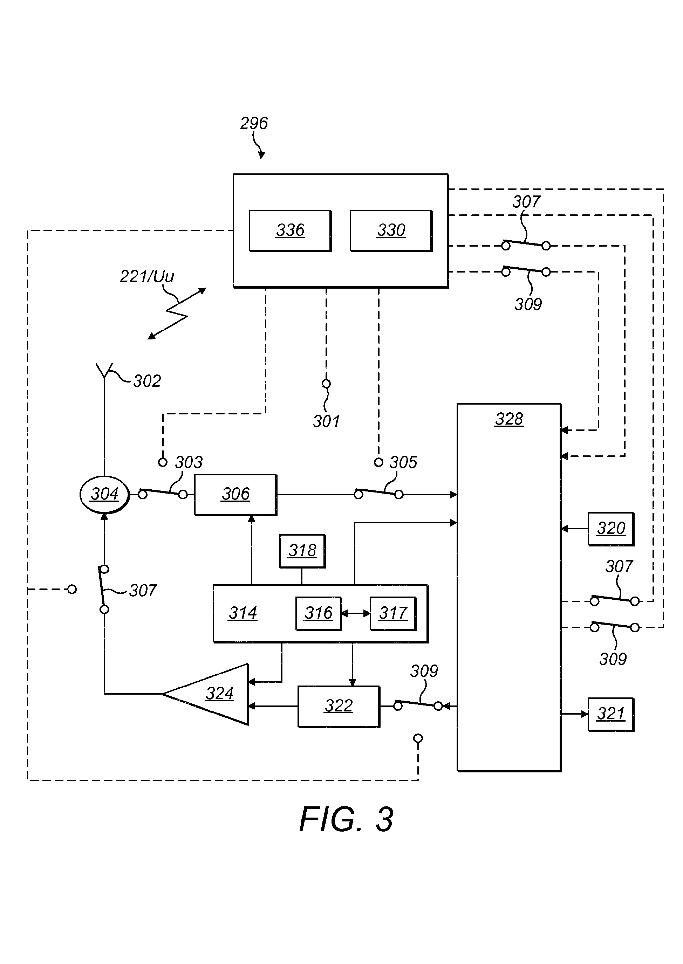

In some examples, the one or more modified UE 296 shown in FIG. 3 may comprise additional transceiver circuitry and signal processing logic 330 (with one UE shown for clarity purposes only) in addition to transceiver unit 227 and signal processing logic 328. In some examples, the additional transceiver logic and signal processing logic 330 may facilitate direct communications between UEs 295, 296 outside of coverage zones 285, 290.

In other examples, the additional transceiver logic and signal processing logic 330 may additionally facilitate communications between UEs 225 within coverage zones or cells 285, 290 and UEs 295, 296 outside of coverage zones or cells 285, 290.

In some examples, one or more UEs 295, initially outside of a coverage zone 285, 290, may transition 226 into coverage zone 285, 290 while connected to UE 296. Further, UE 296 may initially be outside of coverage zones 285, 290 and may transition into coverage zones 285, 290 while connected to one or more UEs 295. Therefore, there may be a potential problem of how to maintain/disconnect connections between UEs 295, 296 initially outside of network coverage if they subsequently transition 226 into network coverage.

Clearly, the various components within the eNodeB 210 can be realized in discrete or integrated component form, with an ultimate structure therefore being an application-specific or design selection.

Referring now to FIG. 3, a block diagram of a wireless communication unit, adapted in accordance with some example embodiments of the invention, is shown. In practice, purely for the purposes of explaining embodiments of the invention, the wireless communication unit is described in terms of a wireless subscriber communication unit, such as a UE 296. In this example, wireless communication unit 296 contains an antenna 302, for receiving transmissions that may originate form within the network (Uu) or from outside of the network 321. In this example, antenna 302 may be coupled to an antenna switch or duplexer 304 that provides isolation between receive and transmit chains within the wireless communication unit 296. In this example, receive switch 303 may be operably coupled between antenna switch or duplexer 304 and receiver front-end circuitry 306 of the UE, providing a receive path to either the front-end circuitry 306 or to signal processing module 330 via RF circuitry 336 of a translation module. In this example, receive switch 303 and transmit switch 307 (situated between power amplifier output 324 and antenna switch or duplexer 304) may be operable to transmit/receive RF type information to signal processing module 330 via RF circuitry 336 of a translation module or to signal processing module 328 via the remainder of the wireless communication unit. One or more receiver chains, as known in the art, include receiver front-end circuitry 306 (effectively providing reception, filtering and intermediate or base-band frequency conversion). The receiver front-end circuitry 306 is coupled to a signal processing module 308 (generally realized by a digital signal processor (DSP)). A skilled artisan will appreciate that the level of integration of receiver circuits or components may be, in some instances, implementation-dependent. In this example, RF link 301 may be operable to allow signal processing module 330 to determine how much functionality to utilise from the wireless communication unit, say RF circuits, and how much RF circuitry 336 of a translation module to use. For example, signal processing module 330 may determine that it requires use of one or all of wireless communication unit's modular system, for example, receiver front-end circuitry 306, signal processor module 328 and controller 314. As a result, RF link 301 may allow the signal processing module 330 access to the functionality of the wireless communication unit. Alternatively, signal processing module 330 may determine that it does not need to utilise any of wireless communication unit's architecture, and instead, utilise its own in built architecture 336. The controller 314 maintains overall operational control of the wireless communication unit 296. The controller 314 is also coupled to the receiver front-end circuitry 306 and the signal processing module 328.

In some examples, receive side baseband switch 305 may be operably coupled between receiver front-end circuitry 306 and signal processor module 328. Receive side baseband switch 305 may be operable to connect either signal processing module 330 or signal processing module 328 to receiver front-end circuitry 306. In this manner, receive side baseband switch 305 may be operable to couple base band signals to either signal processing module 330 or signal processor module 328. Further, transmit side switch 309 may be operable to couple signal processing module 330 or signal processing module 330 to transmitter/modulation circuitry 322. In this example, transmit side switch 309 may be situated between transmitter/modulation circuitry 322 and signal processor module 328. In some examples, the controller 314 is also coupled to a buffer module 317 and a memory device 316 that selectively stores operating regimes, such as decoding/encoding functions, synchronization patterns, code sequences, and the like. Further, in some examples, controller 314 may be operably coupled to signal processing module 330 (not shown for clarity purposes). A timer 318 is operably coupled to the controller 314 to control the timing of operations (e.g. transmission or reception of time-dependent signals) within the wireless communication unit 296. In some examples, signal processing module 330 may receive/transmit user plane data via receive/transmit switching devices 307 and may receive/transmit control plane data via receive/transmit switching devices 309.

It should be noted that switching devices 303, 305, 307, 309 may be operably coupled to controller 314, in order to control the switching devices. In order not to obfuscate from the invention, these connections have not been shown. Further, controller 314 may be controlled via signal processing module 330, which may determine what functionality, via 301, the signal processing module 330 requires.

As regards the transmit chain, this essentially includes an input module 320, coupled in series through transmitter/modulation circuitry 322 and a power amplifier 324 to the antenna 302, antenna array, or plurality of antennas. The transmitter/ modulation circuitry 322 and the power amplifier 324 are operationally responsive to the controller 314.

The signal processor module 328 in the transmit chain may be implemented as distinct from the signal processor in the receive chain. Alternatively, a single processor may be used to implement a processing of both transmit and receive signals, as shown in FIG. 3. Clearly, the various components within the wireless communication unit 296 can be realized in discrete or integrated component form, with an ultimate structure therefore being an application-specific or design selection.

In this example, additional transceiver logic 336 and signal processing logic 330 may be operable to facilitate communications between UEs 296 that are outside of an access network's coverage area. In this example, when switching devices 303 and/or 305 couple additional transceiver 336 and/or signal processing logic 330 into the remaining circuitry of UE 296, UE 296 may be operable to directly communicate with other UEs 296 outside of a network's coverage area. Further, in this example, if additional transceiver 336 and signal processing logic 330 is isolated from the remaining circuitry in UE 296, UE 296 may be operable to function as a prior art UE and communicate with other UEs within a network's coverage area.

In some examples, when the additional transceiver 336 and signal processing logic 330 of the UE 296 is configured to assist communication from another UE located outside of the coverage range of the NodeB, e.g. where the communication unit (UE 296) is operating in a repeater-type mode of operation, the signals received via additional transceiver 336 and signal processing logic 330 may be processed and re-transmitted (say, in one example via signal processing logic 328 and UE transmitter (322, 324) to the NodeB.

In some examples, additional transceiver logic and signal processing logic module 330 is integrated into the remaining circuitry of UE 296. In other examples, the additional transceiver logic and signal processing logic module 330 may be a discrete module that may be externally operably coupled to a UE device.

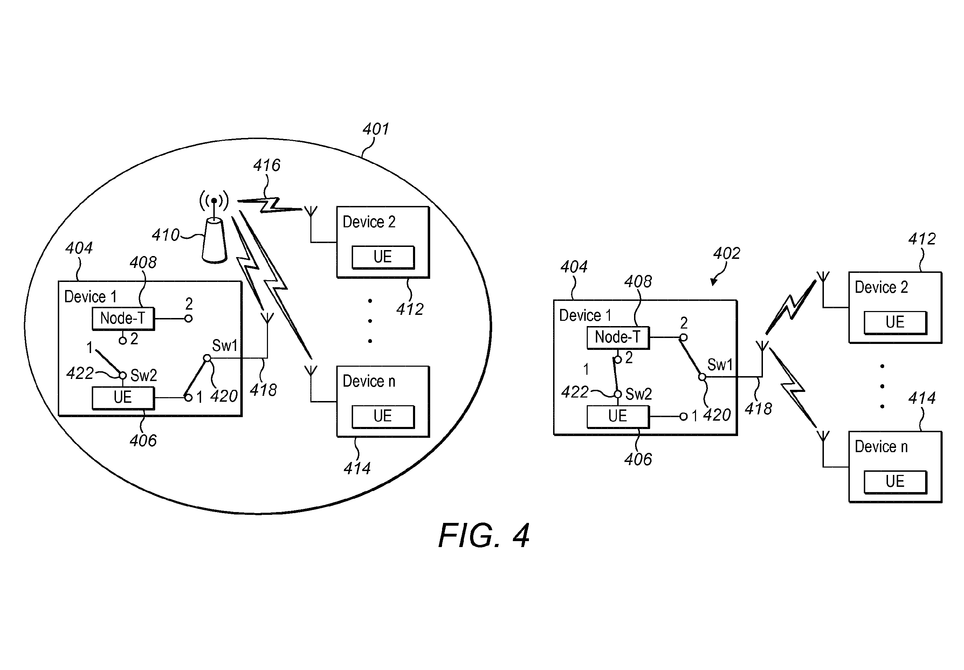

Referring to FIG. 4, a simplified block diagram of a system incorporating a device 404, adapted in accordance with some example embodiments of the invention, is shown. In this example, device 404 is shown inside a coverage area 401, and outside a coverage area 402. In this example, device 404 comprises a UE module 406 and a Node-T module 408, which are separate and discrete from each other. In other examples, UE module 406 and Node-T module 408 may be combined into a single module, for example, as illustrated in FIG. 3.

Referring first to the example where device 404 is inside a coverage area 401. In this case, access network 410 provides coverage area 401 that allows devices 404, 412 and 414 (n devices) to communicate with each other via, for example, radio interface/Uu 416. In this case, device 404 may be in a first mode of operation, wherein Node-T module 408 is isolated from transceiver module 418 and UE module 406. In this case, UE module receives transmissions 416 via transceiver module 418 and switching module Sw1 420. In this case, Sw1 420 is in position 1, coupling UE module 406 to transceiver module 418. Further, switching module Sw2 422 is in position 1, isolating Node-T module 408 from UE module 406. In this mode of operation, device 404 may operate in a similar way to a UE as defined in the art, and in a similar way to devices 412 and 414 that in this example do not comprise Node-T modules 408. In this example, only device 404 has additional Node-T module 408. However, in other examples, a plurality of devices within access network's coverage 401 may comprise Node-T modules 408.

Referring now to the example where device 404 is outside of a coverage area 402. In this example, device 404 may now have transitioned to a second mode of operation. In this example, Sw1 420 may have transitioned to position 2, coupling transceiver module 418 to Node-T module 408. Further, Sw2 422 may have transitioned to position 2, coupling UE module 406 to Node-T module 408. In this mode of operation, device 404 may be operable to communicate with further devices 412, 414 (n devices), without the need for access network's coverage area 401. In some examples, device 404 may be operable to communicate directly with devices 412 and 414 that are in close proximity to device 404.

In other examples, device 404 may facilitate communication between, for example, device 412 and device 414. In further examples, device 404 may facilitate communication with devices outside of a coverage area, for example device 412, and devices inside a coverage area.

In some examples, device 404 may communicate directly with devices, in close proximity to but, outside of a coverage area, and communicate with devices inside a coverage area via the access network 410. In examples, the abovementioned example may occur if, for example, device 404 transitioned from being outside of a coverage area to being inside of a coverage area.

In examples, Node-T module 408 may be a translation module, operable to facilitate communications between devices outside of a coverage area. In examples, Node-T module 408 may be co-located within device 404. However, in other examples, Node-T module 408 may be a discrete component that can be operably coupled to device 408. In yet further examples, Node-T module 408 may be integrated within UE module 406. In some examples, Node-T module 408 may be an eNodeB type device, capable of adopting rules, signals and protocols, for example, which may be used by an access network, for example access network 410. In some further examples, Node-T module 408 may be an eNodeB type device with some additional core network functionality, thereby potentially allowing existing LTE UEs to connect to Node-T modules 408 without further modification. For example, existing LTE UEs radio part, protocols and hardware may be utilised.

In some examples, Node-T modules 408 may require different scheduling and radio resource allocation policies compared to the access network's scheduling and radio resource allocation policies. This may be to prevent interference between LTE UEs at an edge of the network that may be utilising the same resources as the Node-T module 408. In other examples, macro cells, eNodeBs making up the access network 401, may require modification rather than the Node-T modules 408. In this case, the macro cells may be modified to prevent interference between LTE UEs at an edge of the network and device(s) incorporating Node-T module(s) 408. Therefore, the macro cells may require different scheduling and radio resource allocation policies for LTE UEs at the edge of the network compared to LTE UEs that may be centrally located within the network.

In some examples, device 404 may, at the RAN level, perform scheduling, some RRC functionality without mobility management, PDCP/RLC/MAC, may ensure proper multiplexing/ demultiplexing at the MAC layer, may perform termination of the RRC layer, U-Plane data routing at the PDCP SDU layer. At the Core network level, device 404 may terminate the NAS protocols, implement limited tracking in the ECM-IDLE (only presence and no tracking of UE's location), and one or more of the following subset of functions:-
- Broadcast of System Information related to the non-access stratum (NAS);
- Broadcast of System Information related to the access stratum (AS);
- Paging;
- Establishment, maintenance and release of an RRC connection between the UE and E-UTRAN including:
   - Allocation of temporary identifiers between UE and E-UTRAN;
   - Configuration of signalling radio bearer(s) for RRC connection:
   - Low priority SRB and high priority SRB;
- Security functions including key management;
- Establishment, configuration, maintenance and release of point to point Radio Bearers;
- Mobility functions, when the Node-T and the served pair of UEs transition within coverage of the at least one base station, to the extent that a handover back to the network may happen based on network policies and user preferences.
- Notification and counting for MBMS services;
- Establishment, configuration, maintenance and release of Radio Bearers for MBMS services;
- QoS management functions;
- UE measurement reporting and control of the reporting;
- NAS direct message transfer to/from NAS from/to UE.

With regard to some mobility/handover examples, it is envisaged that a UE (that is not a terminal device 404 with a Node-T module and is supervised/controlled by a terminal device with a Node-T module 408) may be handed over to a base station/Node-B should they enter 'macro-cell' E-UTRAN coverage. In this situation, the UE's context information may be moved between the controlling Node-T module and the recipient base station/Node-B via an X2-like interface. In general, UE-controlled mobility occurs in ECM-IDLE mode of operation (although some network support for cell reselection may be possible). In ECM-CONNECTED mode of operation, the mobility is controlled by the radio access network (RAN) & Access Stratum (AS) (however also in the ECM-CONNECTED mode of operation, the UE may still elect to move to ECM-IDLE and perform a cell reselection.)

In some examples, the handover scenario may be slightly different as compared to the legacy system, as two UEs may be handled by the Node-T module, but both UEs desiring to be handed over (or requiring to be handed over) to another Node-T module in proximity, as compared to just one UE.

Thus, in some examples, two UEs may be handed over from the terminal device that is a Node-T module to another Node-T module. Such a multiple handover scenario may occur as part of an 'out of coverage' determination, irrespective of whether at least one more NodeT(s) is/are present in proximity to the UEs. In this example, the Node-T module may be required to obtain information from the UEs that are in direct communication (e.g. from the UEs when in ECM-CONNECTED mode), as to whether they both can see a candidate (alternative Node-T module in proximity to the both communicating UEs) to be handed over to.

Alternatively, in another example, the two UEs may be handed back to be under the control of the eNodeB/EPC. In this example, one or more of the UEs may choose to invoke a registration with the network when they determine that they are back within the coverage of the base station/Node-B/EPC, for example by indicating a visibility of a macro eNodeB and/or indicating a signal strength of signals received from a macro eNodeB. However, in such a situation, the UEs may cause their session(s) to be terminated, with the effect that these sessions will need to be re-established (service interruption aspects) when being handed over to the base station/Node-B/EPC.

In some further examples, translation module 408 may perform the functions of an access network, for example access network 410. In examples, the translation module 408 may adopt signals and protocols utilised by, for example, access network 410, thereby simulating access network 410, allowing direct communication between device 404 and devices 412, 414 in close proximity to device 404. Further, in examples, translation module 408 may relay user plane data between itself and devices 412, 414 in close proximity to device 404, as well as manage radio resources and schedule transmissions between itself and other devices 412, 414 in close proximity to device 404 that are outside of a coverage area.

In examples, translation module 408 may be coupled between UE module 406 and transceiver module 418, thereby allowing device 404 to directly communicate with other devices in close proximity that are outside of a coverage area.

In some examples, device 404 may transition between being inside a coverage area and being outside of a coverage area, and vice versa. In examples, device 404 may be initially outside of a coverage area and may be communicating directly with other devices/UEs outside of the coverage area that are in close proximity to device 404. In this example, device 404 may be in the second mode of operation, as discussed above, wherein Node-T module 408 may be operably coupled in the communication path between UE module 406 and transceiver module 418. If device 404 were to enter a coverage area, for example coverage area 401 defined by access network 410, then device 404 may have several modes of operation. For example, device 404 may sever communications that it may have established with devices whilst outside of coverage area 401, for example, with devices 412, 414 that were also outside of coverage area 401, and in close proximity to device 404, before connecting to access network 410 by switching to the first mode of operation, discussed above. Alternatively, device 404 may maintain communications that it may have established with devices whilst outside of coverage area 401 and, for example, it enters coverage area 401, additionally connects with access network 410. In this example, if a different frequency band is utilised between access network 410 and Node-T module 408 in device 404, then both these communication modes can co-exist without further modification being required. Therefore, in this example, device 404 may be able to maintain communication with devices outside of coverage area 401, whilst still connecting to devices within the coverage area 401 via access network 410. In other examples, if the same or similar frequency band is utilised by access network 410 and Node-T module 408 in device 404, then a macro cell, for example an eNodeB making up access network 410, may require modification to minimise any interference to other devices utilising that macro cell. For example, different scheduling and/or radio resource allocation policies may need to be utilised for devices/UEs that may be at an edge of the macro cell's coverage area due, in part, to these UEs being closer to device 404, and, therefore, may be more likely to receive interfering messages from device 404 if transmitted on the same frequency as the macro cell within the access network 410. A yet further option facilitates continued communications with devices that are outside of coverage area 401 until the session is finished, and then the Node-T module 408 switches its operational mode from the second mode of operation to the first mode of operation and connect to access network 410, for example. Alternatively, the Node-T module 408 may just stop employing control functions for the selected devices for which the communication session(s) have been stopped). Thus, in certain conditions and configurations the Node-T module 408 may release its supervision and control functions for some UEs that stopped sessions, thereby allowing them to use the macro cell network. In this example, similar modifications may need to be made, as discussed above, based on whether the frequency bands utilised by access network 410 and Node-T module 408 are the same or different.

In examples relating to FIG. 4, only one device 404 with a Node-T/translation module 408 has been illustrated for a given access network's coverage area 401. It should be noted that more than one device within the access network's coverage area 401 is allowed. In fact, all devices 412, 414 (where 414 denotes n devices) can each have at least one Node-T/translation module 408. In examples where there may be a plurality of devices/UEs each having at least one Node-T/translation module 408, it may be necessary to control which devices have an active translation module 408. In examples, it may be preferable to have only one Node-T module 408 active for a particular group of devices communicating together outside of a coverage area, or where the device with a Node-T module 408 has transitioned into the network's coverage area as discussed above, as the device with the active Node-T module 408 may have taken on the role of a radio resource controller/manager. In this example, it may not be necessary to have more than one device 404 acting as a radio resource controller/manager. However, in other examples, for a particular group of devices/UEs, a plurality of devices with Node-Ts 408 may communicate with one another in order to, for example, impact their radio resource allocation policies, thereby potentially minimising any inter cell interference. In examples, Inter Cell Coordination (ICIC) techniques could be implemented over the X2 interface, thereby potentially allowing several groups/clouds of devices to be established utilising different devices with Node-T modules as radio resource managers, for example.

Utilising a translation module 408 may allow different devices utilising different frequencies for signal transmission and reception, different waveforms, different modulation and coding schemes in the uplink and downlink scenario to communicate when outside of a network's coverage area. Without utilising translation module 408, direct communications between devices outside of a network's coverage area would not be possible.

In a further example, device 404, for example, may communicate with UEs outside of a coverage area using the Uu interface as defined in the LTE system. In this example, if a UE with a Node-T module 408 is outside of a coverage area, and in close proximity to another UE 412, that may or may not have a Node-T module 408, that it wishes to connect with (which may also be outside of the coverage area) it may utilise its Node-T module 408 to convert its uplink message, which is generally sent using SC-FDMA, to OFDMA, allowing the other UE 412 to receive UEs 404 transmission, thereby facilitating communication between the two devices 404, 412. Without translation module 408 being enabled, direct communication between UEs 404 and 412 would not be possible without being inside a network's coverage area, for example coverage area 401. In another example, additionally or in combination with the abovementioned examples, FDD may be utilised. In this example, the translation module 408 may also swap the frequencies on which the UE 404 would normally transmit and receive, thereby allowing other UEs 412, 414 to receive signals from the device with translation module 408 on a frequency F2, for example. In examples, frequency F2 may have been utilised by the other UEs 412, 414 to receive transmissions when within the network's coverage area 401, thereby allowing the other UEs 412, 414 to receive UEs 404 transmissions. Similarly, translation module 408 may swap received frequencies from the other UEs 412, 414 before reaching UE module 406, thereby allowing the other UEs 412, 414 to transmit on their normal frequency F1 of the duplex pair, whilst allowing UE module 406 to receive their transmissions. Similarly, if UEs 412, 414 wish to establish a communications link with the UE with translation module 408, the translation module may need to be utilised. Otherwise, the UE 404 may not be able to receive the UEs 412, 414 transmissions. In examples, translation device 408 is operable to determine the frequencies, waveforms, modulation and coding techniques of UEs attempting to communicate with translation device 408.

It should be noted that the abovementioned examples are not limited to communication between two UEs, and communication between a plurality of UEs is envisaged.

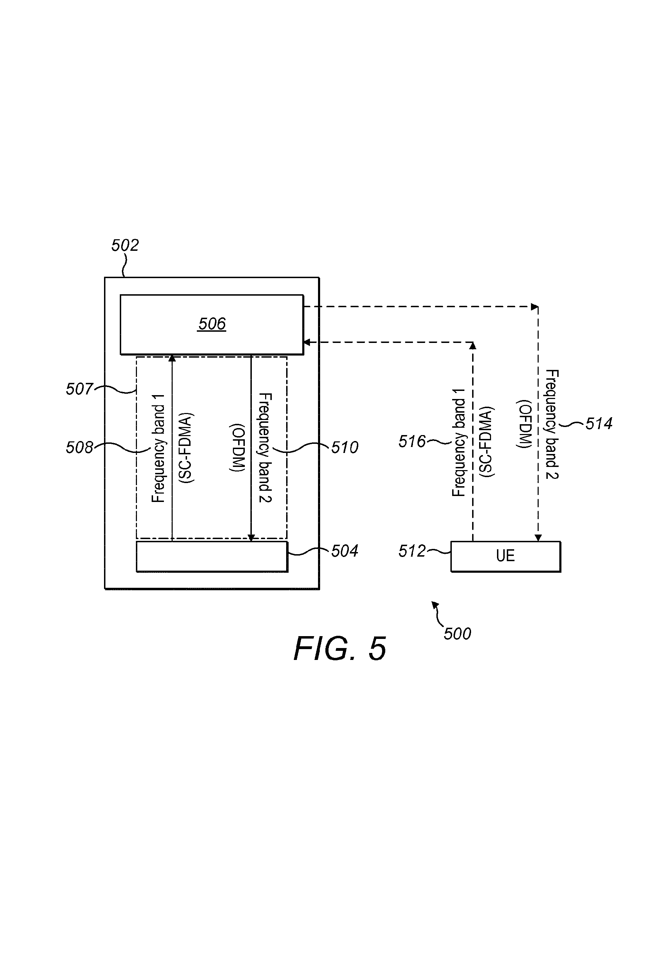

Referring to FIG. 5, a simplified block diagram of an example of Node-T operation 500 is shown. In this example, device 502 comprises UE module 504 and Node-T module 506. In this example, modules 504, 506 are operably coupled via a communications link 507, comprising receive 508 and transmit 510 capabilities. In this example, operation of FIG. 5 will be described with reference to device 502 initially communicating with LTE UE 512. However, it should be clear that the operation of FIG. 5 is similar if LTE UE 512 were to initially connect with device 502. In this example, both device 502 and LTE UE 512 are outside of any network coverage. In this example, UE module 504 transmits an uplink message using Frequency band 1, which in this example uses SC-FDMA. In the prior art, this uplink message would be received by an access network and transmitted to UE 512 using a different frequency, generally on OFDM/OFDMA. In the prior art, both these devices would be inside a network coverage area. However, in the present case, both devices are outside of a network coverage area. Therefore, if utilising the prior art, UE device 512 would receive UE device's 504 uplink message using SC-FDMA, and would not be able to interpret this uplink message. However, utilising aspects of the invention, UE 504 may transmit the uplink message using SC-FDMA on frequency band 1 on the receive 508 part of the communication link 507 to Node-T module 506. Node-T module 506 may then be operable to translate this uplink message to another frequency, for example frequency band 2 using OFDM/OFDMA. Upon receipt 514 of this transmission from Node-T module 506, UE 512 may be able to receive and interpret the uplink message from UE 502 within device 504. Similarly, if UE 512 were to transmit 516 an uplink message to device 502, utilising frequency band 1 using SC-FDMA, Node-T module 506 may be operable to intercept this transmission and translate this message 516 to frequency band 2 using OFDM/OFDMA, and relaying this message on the transmit part of the communications link 507 to UE module 504. In this example, UE 504 may be operable to receive and interpret this message as it may have been translated to the correct frequency. In examples, device 502 may be operable to communicate with more than one LTE UE 512 at any one time. Further, in examples, device 512 does not need to be an LTE UE. Device 512 could be a further device 502, for example, with at least one Node-T module 506. Further, in examples, device 502 may have either transitioned into or out of a coverage area, and, therefore, may be operable to communicate with one or more devices outside of a coverage area, and one or more devices within a coverage area.

In a further example, the translation device/Node-T module 506 may terminate control plane and user plane protocols of device 502 that wishes to communicate with device 512, for example, which may embody an LTE UE or a further device with at least one Node-T 506 module. In this example, translation device 506 may perform protocol translation and adopt message formats required by the target device, in this example UE 512. In this example, the translation device 506 may transmit user plane data to the target device, UE 512, at the service data unit (SDU) level of the packet data convergence protocol (PDCP) layer. In this example, communications link 507 may be operable to carry signals of different types. In examples, communications link 507 may be operable to carry the following:-
- Radio frequency signals that may embody various types of waveform and that may have varying physical properties;
- Base band signals that may have been converted to the common lower frequency band;
- Control plane data, for example, protocol data.
- User plane data, for example, user data and protocols used to carry this data;

It is generally known that the L2 protocol structure for the downlink and uplink for any two given conventional UEs attempting to communicate directly will fail due to the fact multiplexing at the MAC layer will fail due to likelihood of using different logical channel identifiers for DTCH logical channels (This is due to the fact that mapping of bearer ids to logical channels ids allowing multiplexing is implementation specific. Therefore, these UEs would not be able to demultiplex correctly at the MAC layer allowing data to be linked with the right bearer. Therefore, a potential problem may be how to implement a system that may allow two given UEs to successfully communicate directly with each other when one or all of the UEs are not within network coverage.

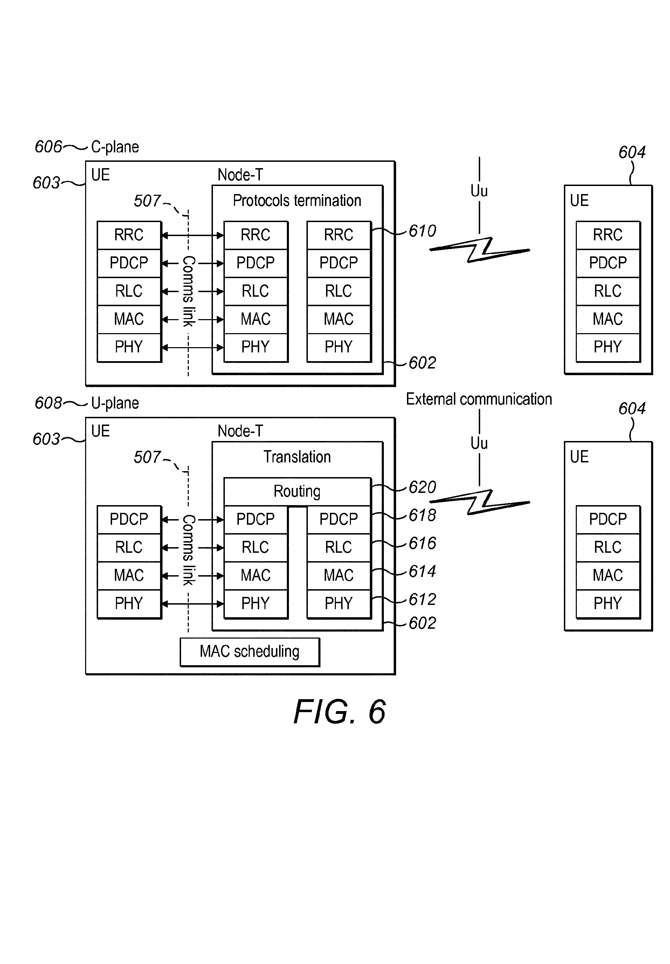

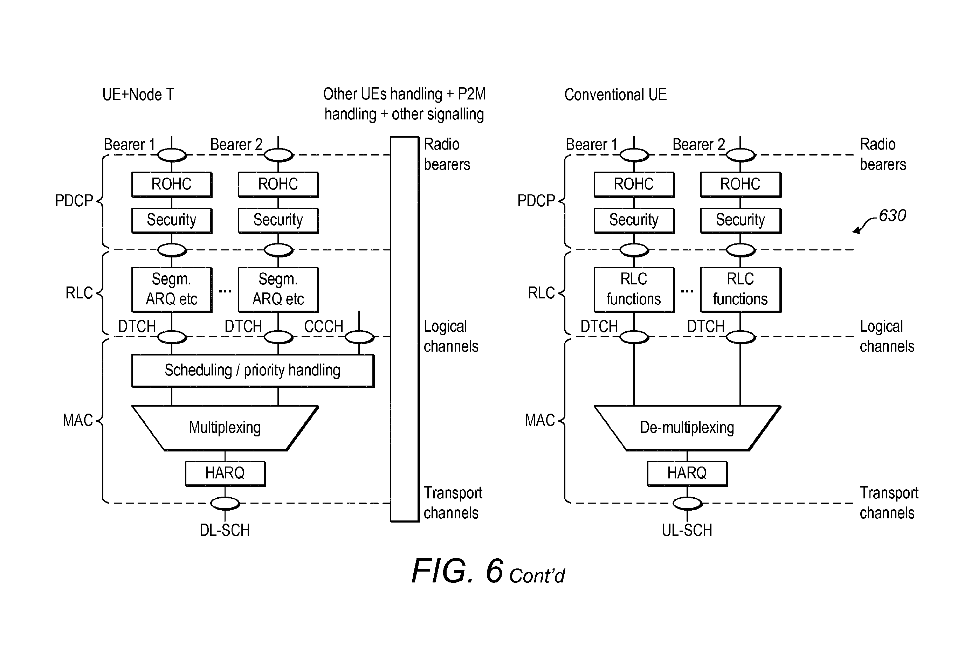

FIG. 6 illustrates a simplified block diagram of protocol layers within a device incorporating a translation device, according to aspects of the invention. Depending on the type of signals carried over the abovementioned communications link 507, corresponding protocol translation/termination at the appropriate level may be required. Without translation device/Node-T module 602, any two given UE's 603, 604 may be incompatible to, for example:-
- Establish communication as another peer device does not terminate control plane data (RRC) 610;
- Translate the protocol layers used for user plane data transfer which are not terminated directly at the peer devices (i.e. the PHY 612, MAC 614, RLC 616, PDCP 618);
- Route the user plane data 620 as carried in the SDUs at the PDCP layer which may normally be routed back to the access network/core network.

In this example, UE 603 may comprise a Node-T module 602, and UE device 604 may be an LTE UE without a Node-T module 602. FIG. 6 illustrates protocol layers in the control plane 606 and user plane 608. In this example, communications link 507 and Node- T module may enable UEs 604 and 602 to communicate with each other when outside of network coverage, for example.

Note that it may not possible to use conventional UEs for device to device communications outside of a coverage area, due, in part, to the fact that the conventional UEs would expect that the termination point is not at the UE, for example as in an LTE system the RRC protocol is terminated at the eNodeB. Therefore a translation device may be required. Further, it may be that a subset of RRC functions could be required, rather than the complete set of functions. For example, the mobility functions may not be required as mobility could be controlled by a UE with a translation device and not as in a conventional system where the mobility is controlled by the network (i.e. the radio access network).

In an LTE/EPC system the NAS protocol may be terminated at the MME. The NAS protocol facilitates the following functions at the MME:
- NAS signalling: NAS signalling is terminated at the UE and the MME.
- NAS signalling security: NAS signalling security requires the MME to handle keys and apply/check message integrity (MAC verification) and encrypt/decrypt NAS traffic (MME).
- Authentication and Authorization (MME)
- Bearer management functions (MME)
- Mobility management for UEs in the ECM-IDLE state (this is only restricted to presence tracking as there is no need to implement tracking of Ue's location in the ECM-IDLE - MME)
- The signalling of the IP address(es) via the NAS signalling.
- Facilitates the Attach/registration procedure and the transitions between the ECM-IDLE and ECM-CONNECTED states.

If the security context and the UE context information are pre-provisioned at the UE and the eNodeB, the Authentication and Authorisation as well as the Attach procedure may not be required.

The presence tracking in ECM-IDLE helps a Node-T determine whether a UE is still in proximity. The presence tracking may be implemented by periodic invocation of the Tracking Area Update procedure, which is used primarily to indicate a UE's presence. When the Node-T does not receive the expected signalling from a UE, a UE is marked as not present and the UE's context information stored at the Node-T may be removed or kept for some time as indicated by the system configuration parameters. In some examples, another use of the presence tracking may be to facilitate the UE's context transfer to another Node-T, or even back to the fixed core network/Infrastructure. In that case, the information passed by a UE in the notification message may include information about other Node-Ts in proximity, or information as to whether a UE is now in network coverage. However to implement this feature, the UE may be required to invoke the Node-T discovery procedure and/or PLMN search procedure in ECM-IDLE (in order to improve the search efficiency, the latter may be restricted to specific PLMN(s) pointing to defined parts of spectrum to be searched). The Node-T that is currently used by a UE makes a decision as to whether context transfer should be initiated and carries out the procedure if it needs to be. This is referred to as the network managed mobility. This does not restrict the UE's ability to trigger the UE controlled mobility. Whether the UE and/or network controlled mobility is used is defined by the configuration parameters or system indication such as for example the information sent on the broadcast channel. The same information may specify priority criteria and conditions governing the order in which a mobility scheme shall be applied.

In a conventional system the mobility is controlled by the network (i.e. the eNodeB).

In some examples, the mobility management may be controlled by the UE as far as the switching between a Direct mode of Operation (DMO) network and a macro cell is concerned. After switching back to a macro cell, the UE's mobility may be controlled by a macro access network.

In a legacy system NodeBs may be considered to be stationary, and UEs may be considered mobile. Whereas in a DMO network, NodeBs may be mobile as well as the UE(s). The mobility, as such, may not be required as UE's access to the services may be limited by the DMO network coverage and geographical location of the entity providing coverage i.e. the UE with the translation device. However the UE may still make a decision as to when to switch over to the macro cell.

In terms of service continuity when the UE is back in network coverage, there may be several options as how to control the switching process at the UE. For example:-
- The device may stop communicating with devices which are not in network coverage.
- The device may continue communicating with devices which are not in coverage.
- The device may continue communication until the session has finished and switched over to a macro cell.

In some examples, if the same frequency band is used the latter approach may require special arrangement in a macro cell to minimise the interference level to other devices in its neighbourhood which use a macro cell. This may entail different scheduling and radio resource allocation policies for devices which are at the edge of a cell. However if a different frequency band is used these two communication modes can coexist without any further arrangements.

Effectively one Node-T may be active for a group of devices communicating together because this device may take on a role of a radio resource controller/manager. However there could be some means for Node-Ts to communicate with one another in order to impact their radio resource allocation policies to minimize the inter cell interference. In the prior art for the LTE system, the Inter Cell Interference Coordination (ICIC) techniques may be used over the X2 interface. In this invention the X2 interface could be implemented although handover is not required. This wireless X2 interface would be only used over the pre-allocated spectrum while out of network coverage to minimize inter cell interferences generated by several Node-Ts which in proximity. This would allow establishing of several groups/clouds each of them using a different Node-T as a radio resource manager.

This may be especially useful in the public safety context when several types of service e.g. special disaster handling units/squads and for example fire brigades use the same frequency band.

Abovementioned fig. 6, 630, applies to U plane but also applies to SRB1 and SRB 2 in the C-plane.

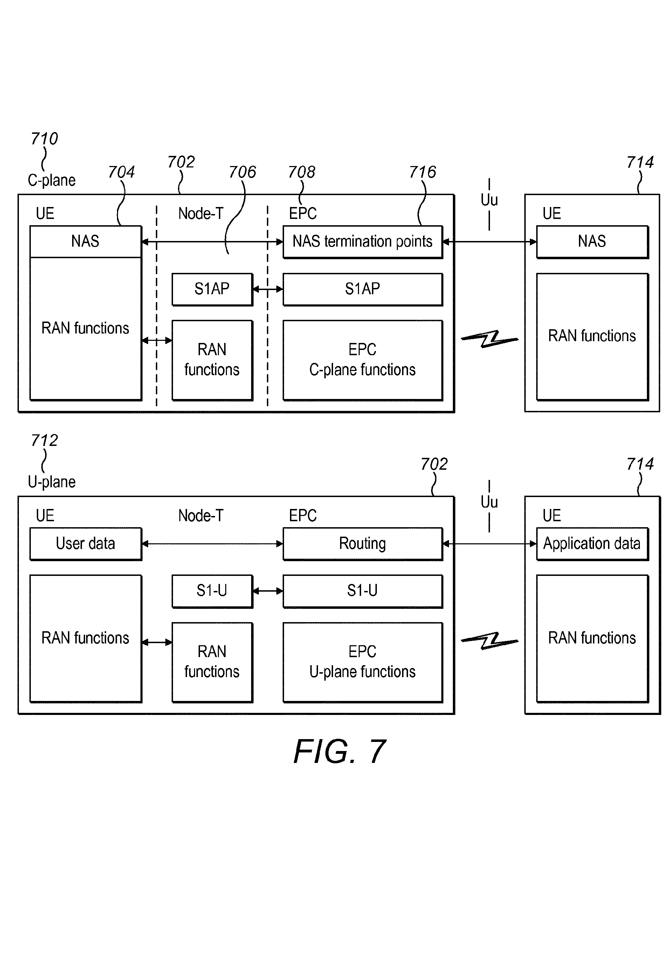

Referring to FIG. 7, a simplified block diagram of a device incorporating a translation module is illustrated, according to aspects of the invention. In this example, UE device 702 comprises a subset of the core network functionality. In this example, for an evolved packet system, the subset of core network functionality may comprise MME, S-GW and PDN-GW functionality. In this example, UE 702 may comprise UE functionality 704, Node-T functionality 706 and EPC functionality 708. FIG. 7, as in FIG. 6, illustrates control plane operation 710 and user plane operation 712. In this example, the use of EPC functionality may facilitate functions such as registration, authentication, management of idle-connected states, as well as routing of use plane data to target UE 714, for example. In this example, target UE 714 is an LTE UE without any additional functionality. However, in other examples, target UE 714 may be similar to UE 702 or UE 603 from FIG. 6. In this example, the translation device/Node-T 706 may allow termination of the NAS protocol 716 and the use of security functions that may not otherwise have been possible if communication had occurred without Node-T 706 and EPC 708 functionality. In examples, as discussed above, a subset of EPC functionality may be required to facilitate communications with conventional LTE UEs, for example. Examples of EPC functions that may be required are illustrated below:-
- NAS signaling: NAS signaling may be terminated at the UE and the MME (MME).
- NAS signaling security: NAS signaling security may require the MME to handle keys and apply/check message integrity (MAC verification) and encrypt/decrypt NAS traffic (MME).
- Authentication and Authorization (MME)
- Bearer management functions (MME)
- Mobility management for UEs in the ECM-IDLE state (this may be restricted to presence tracking as there may be no need to implement tracking of UE's location in the ECM-IDLE - MME)
- The paging procedure control(MME)
- UE status monitoring (e.g. reachability- MME).
- Buffering of downlink data for UEs which may be in the ECM-IDLE state (SGW).
- Initiation of the paging procedure for the UEs' which may be in the ECM-IDLE state (SGW)
- Routing and forwarding (SGW)
- IP address allocation for UEs (PGW)
- UL/DL service level gating based on filters (i.e. based on quintuples of source/destination IP addresses and ports and protocol type - PGW (may be optional))
- UL/DL service level rate enforcement (per SDF rate policing/shaping - PGW (may be optional))
- UL/DL rate enforcement based on APN-AMBR parameter (PGW)
- DL rate enforcement based on the accumulated MBRs of the SDFs aggregate for the same GBR QCI (e.g. by rate policing/shaping - PGW)
- Packet filtering (e.g. by DPI) and screening (e.g. used to detect whether the UE uses IP address and IP prefix it was assigned - PGW)
- UL/DL bearer binging (PGW)
- UL bearer binding verification (the network double checks whether the UE has applied the correct uplink bearer binding - PGW)
- Functionality defined in RFC 4861 for IPv6 neighbor discovery (i.e. handling of Router Advertisements, Router Solicitations and Neighbor Solicitations messages) or DHCP functions (server and clients (relaying functions) for IPv6) (PGW)
- DHCP functions (server and clients (relaying functions) for IPv4 (PGW)

The above list of example EPC functions may differ if the target UE 714 is not an LTE UE 714 without additional functionality. For example, if LTE UE 714 were a UE with additional functionality, for example, like UE 603 or UE 702, the abovementioned list of example EPC functions may differ. Further, in examples, there may be no need for a SGi interface to external PDN networks. In this example, S1 interfaces and S5 interfaces may be internal. Therefore, external S1-U bearers and S5 bearers within the network may be collapsed as, in this example, they may be internal to device 702.

In a further example, devices utilising a translation device/Node-T module may be preconfigured with security credentials that may render any authentication procedures as unnecessary. For example, for an LTE/EPC system, at least security credentials relating to K_{ASME} may be preconfigured into devices utilising a translation device/Node-T module. In other examples, in order to enable complete initialisation of security functions, parameters such as NAS/AS algorithms and eKSI may also be required. Further, in some examples, NAS keys and COUNT may also need to be derived and initialised. Further, in some examples, devices utilising a translation device/Node-T module may be preconfigured with UE context information. By potentially preconfiguring UEs with this context information may remove the necessity to utilise Attach and authentication procedures, which would usually be utilised to generate this UE context information. By preconfiguring particular UEs, these devices may be able to initiate communications without having to attach to the system, as UE context information and security credentials may be preconfigured in to these UEs, thereby allowing the core network to establish secure communication without further signalling being required. Potential examples of context information that may be preconfigured into a UEs translation device/Node-T module is shown in Table. 1. In this example, the information presented in Table 1 is a subset of entries normally required.

In a yet further example, a UE device that incorporates a translation device/Node-T module, may implement a subset of network side functions of the application layer.

**Table.1 Examples of potential preconfigured information for UEs utilising a translation device/Node-T module**

| **Field** | **Description** |
|---|---|
| GUTI | Globally Unique Temporary Identity. |
| Selected NAS Algorithm | Selected NAS security algorithm. |
| Selected AS Algorithm | Selected AS security algorithms. |
| eKSI | Key Set Identifier for the main key K_{ASME}. Also indicates whether the UE is using security keys derived from UTRAN or E-UTRAN security association |
| K_{ASME} | Main key for E-UTRAN key hierarchy based on CK, IK and Serving network identity. |
| NAS Keys and COUNT | K_{NASint}, K_{NASenc}, and NAS COUNT parameter. |
| UE Specific DRX Parameters | Preferred E-UTRAN DRX cycle length |
| Allowed CSG list | The Allowed CSG list, which is under both user and operator control, indicates the list of CSG IDs and the associated PLMN where the UE is a member. |
| Operator CSG list | The Operator CSG list, which is under exclusive Operator control, indicates the list of CSG IDs and the associated PLMN where the UE is a member. |
| *For each active PDN connection:* | |
| APN in Use | The APN currently used. This APN shall be composed of the APN Network Identifier and the default APN Operator Identifier, as specified in TS 23.003 [9], clause 9.1.2. |
| APN-AMBR | The maximum aggregated uplink and downlink MBR to be shared across all Non-GBR bearers, which are established for this APN. |
| Assigned PDN Type | The PDN Type assigned by the network (IPv4, IPv6, or IPv4v6). |
| IP Address(es) | IPv4 address and/or IPv6 prefix |
| Default Bearer | Identifies the default bearer within the PDN connection by its EPS Bearer Id. The default bearer is the one which is established first within the PDN connection. |
| *For each EPS Bearer within the PDN connection* | |
| EPS Bearer ID | An EPS bearer identity uniquely identifies an EPS bearer for one UE accessing via E-UTRAN. |
| TI | Transaction Identifier |
| EPS bearer QoS | GBR and MBR for GBR bearer. |
| TFT | Traffic Flow Template. |

| *For each active PDN connection:* | |
|---|---|
| APN in Use | The APN currently used. This APN shall be composed of the APN Network Identifier and the default APN Operator Identifier, as specified in TS 23.003 [9], clause 9.1.2. |
| APN-AMBR | The maximum aggregated uplink and downlink MBR to be shared across all Non-GBR bearers, which are established for this APN. |
| Assigned PDN Type | The PDN Type assigned by the network (IPv4, IPv6, or IPv4v6). |
| IP Address(es) | IPv4 address and/or IPv6 prefix |
| Default Bearer | Identifies the default bearer within the PDN connection by its EPS Bearer Id. The default bearer is the one which is established first within the PDN connection. |

| *For each EPS Bearer within the PDN connection* | |
|---|---|
| EPS Bearer ID | An EPS bearer identity uniquely identifies an EPS bearer for one UE accessing via E-UTRAN. |
| TI | Transaction Identifier |
| EPS bearer QoS | GBR and MBR for GBR bearer. |
| TFT | Traffic Flow Template. |

The EPC functions differ from the conventional system in at least one or more of the following ways:
- The way a subset of the NAS protocol is implemented, e.g. that the tracking of UE's location in the ECM-IDLE is not required-only tracking of UEs presence.
- The tracking of presence may be linked with the quality of the signal received from the Node-T, i.e. the UEs may notify the device having the RAN and EPC functionality when they think they are close to be dropped off the DMO network. Alternatively this linkage may be provided at the mode which provides the RAN and EPC functionality (the RAN needs the measurements in order to perform the scheduling operation and adaptive modulation and coding).
- The S1 bearers and S5 bearers are collapsed as they reside in the same entity.
- The SGi interface is not required.
- The U-Plane data may not be routed in the core network if it has already occurred in the RAN( at the PDCP SDU level).

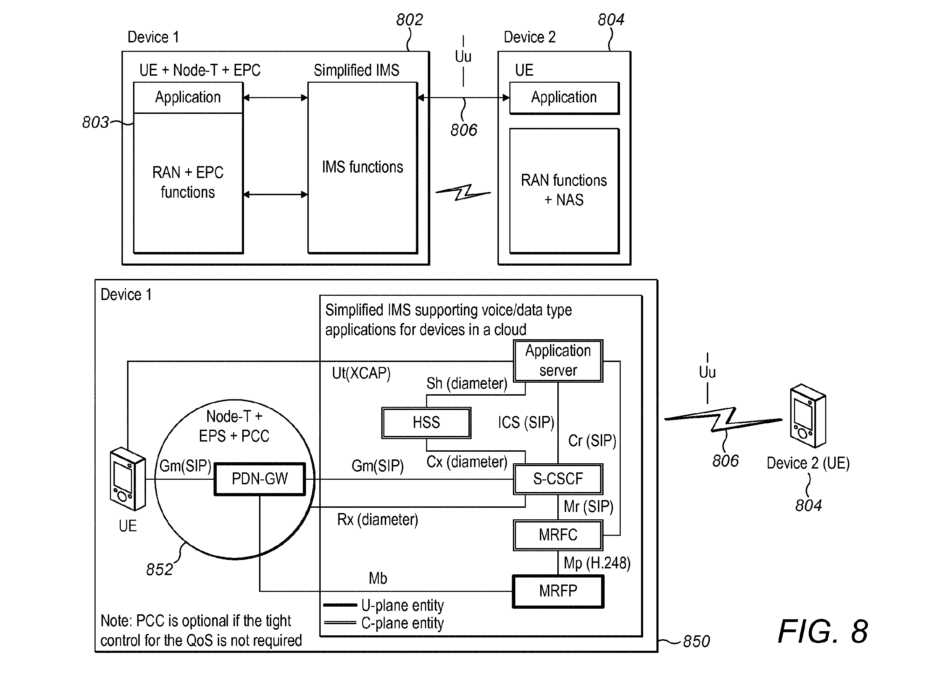

Referring to FIG. 8, a simplified block diagram of a device 802 implementing at least a translation device 803 according to aspects of the invention is illustrated. In this example, the device 802 may implement a subset of the network side functions of the application layer, for example. In examples, for UEs/devices 802 utilising IP Multimedia Subsystem (IMS) protocols to perform multimedia call control, the device 802 may implement a subset of the CSCF functionality of the IMS network and may implement a subset of the functions of an application server. Therefore, in some examples, the device 802 may enable IMS clients in UEs/devices 802 to establish multimedia sessions with other UEs/devices 804 over a Uu 806 connection, for example. An example of a subset of IMS entities required to facilitate communication and application inter networking for IP Multimedia services in a cloud, for example, is depicted in 850. In this example, without at least translation device 852, UEs would not be able to take advantage of any supplementary services facilitated by the application server. For example, UEs may not be able to establish a conference call, nor could IMS security be initiated correctly due, for example, to the lack of infrastructure support. Furthermore, it may not be possible to utilise any IMS based services. Therefore, the illustrated simplified architecture within 850 may allow UEs to utilise existing SIP clients and the IMS applications developed or conventional terminals. In some examples, a PCC subsystem may be utilised. In other examples, the PCC subsystem may not be required, for example, if the application layer provides adequate admission control or the networks are under utilized and the resource shortages are unlikely to occur.

In a further example, devices utilising a translation device/Node-T module may be preconfigured with IMS security credentials that may render any IMS authentication procedures unnecessary. For example, for an IMS system, at least IMS security credentials relating to IMS security key may be preconfigured into devices utilising a translation device/Node-T module and the S-CSCF. Further, in some examples, devices utilising a translation device/Node-T module may be preconfigured with IMS context information. Preconfiguring UEs with IMS context information renders IMS Registration and authentication procedures unnecessary, which would otherwise have been triggered to create IMS context for the UE. By preconfiguring particular UEs, these devices may be able to initiate IMS communications without having to perform IMS Registration with the system, as IMS context information and security credentials are available for use at the UEs and IMS network, thereby allowing the IMS network to establish secure communication without further signalling being required.

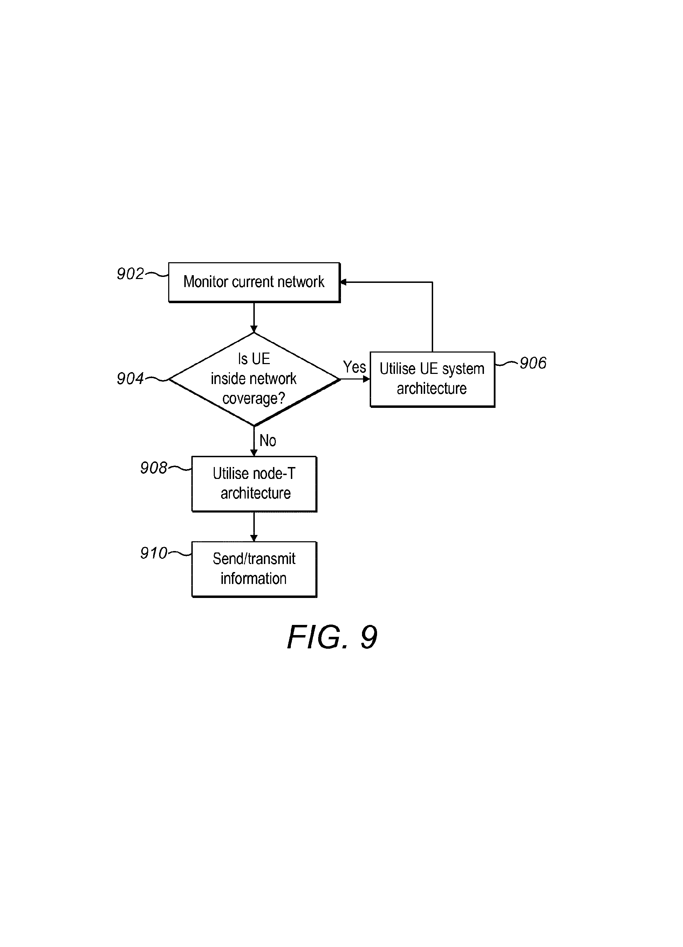

Referring now to FIG. 9, a flow diagram of a UE utilising aspects of the invention is shown 900. Initially, at step 902, the UE may monitor its network coverage and, at step 904, may determine whether it is currently within a current network. If the UE determines that it is inside network coverage, the UE may utilise its current system architecture and either maintain or connect to the current network 906. In some examples, network coverage may be determined from the access network. If the UE determines that it is not within network coverage, the UE may, at step 908, utilise its translation node, Node-T, architecture. At step 910, the UE may be operable to receive/transmit information once it has established a connection to a UE/device via its Node-T module.

When the translation module of the terminal device is configured to track at least one from a group of: a location of the at least one other terminal device in an evolved packet system (EPS) Connection Management ECM-CONNECTED state, the location of the at least one other terminal device may be linked with a quality of a signal received at the translation module from the at least one other terminal device. The location of the at least one other terminal device and the quality of a signal received at the translation module from the at least one other terminal device may be used by a signal processor in the translation module to perform at least one from a group of: a scheduling operation, adaptive modulation and coding. In some examples, the at least one first signal processor may be arranged to perform a communication handover with the first communication unit to a second terminal device. In some examples, the at least one first signal processor may be arranged to perform a communication handover with the first communication unit and at least one further communication unit to the second terminal device. In some examples, the communication handover may comprise context information related to the first communication unit. In some examples, the at least one first signal processor may be arranged to perform a communication handover from the first communication unit to the at least one base station when the first communication unit moves within coverage range of the at least one base station. In some examples, the at least one first signal processor may be arranged to perform a communication handover from the first communication unit and at least one further communication unit to the at least one base station when the first communication unit and at least one further communication unit move within coverage range of the at least one base station.

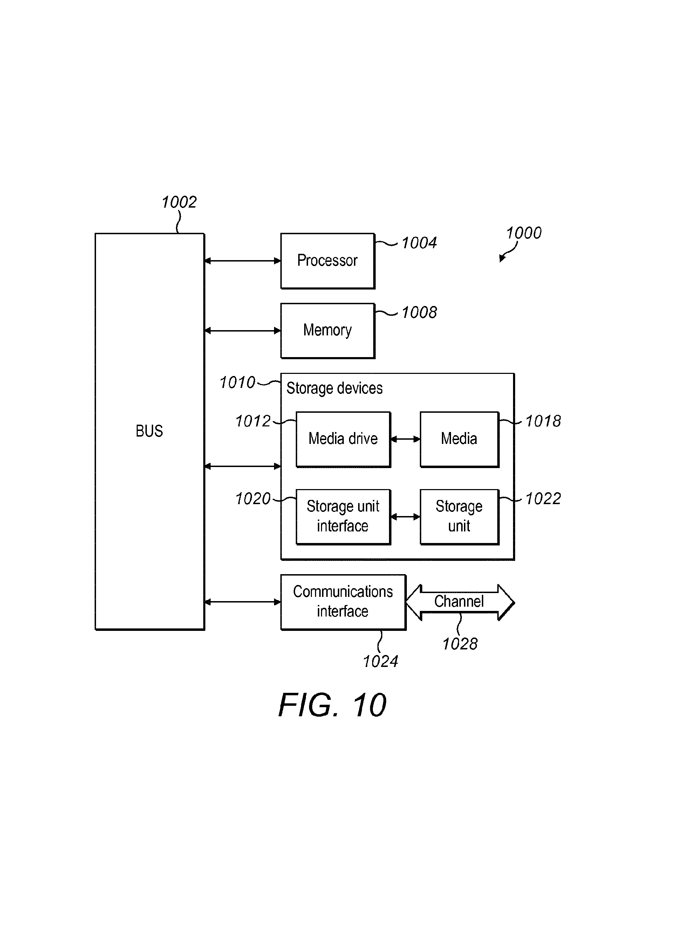

Referring now to FIG. 10, there is illustrated a typical computing system 1000 that may be employed to implement software controlled switching between operation when within a network's coverage and operation when outside of a network's coverage in embodiments of the invention. Computing systems of this type may be used in wireless communication units, such as first or second wireless network elements. Those skilled in the relevant art will also recognize how to implement the invention using other computer systems or architectures. Computing system 1000 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 1000 can include one or more processors, such as a processor 1004. Processor 1004 can be implemented using a general or special-purpose processing engine such as, for example, a microprocessor, microcontroller or other control logic. In this example, processor 1004 is connected to a bus 1002 or other communications medium.

Computing system 1000 can also include a main memory 1008, such as random access memory (RAM) or other dynamic memory, for storing information and instructions to be executed by processor 1004. Main memory 1008 also may be used for storing temporary variables or other intermediate information during execution of instructions to be executed by processor 1004. Computing system 1000 may likewise include a read only memory (ROM) or other static storage device coupled to bus 1002 for storing static information and instructions for processor 1004.

The computing system 1000 may also include information storage system 1010, which may include, for example, a media drive 1012 and a removable storage interface 1020. The media drive 1012 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 1018 may include, for example, a hard disk, floppy disk, magnetic tape, optical disk, CD or DVD, or other fixed or removable medium that is read by and written to by media drive 1012. As these examples illustrate, the storage media 1318 may include a computer-readable storage medium having particular computer software or data stored therein.

In alternative embodiments, information storage system 1010 may include other similar components for allowing computer programs or other instructions or data to be loaded into computing system 1000. Such components may include, for example, a removable storage unit 1022 and an interface 1020, such as a program cartridge and cartridge interface, a removable memory (for example, a flash memory or other removable memory module) and memory slot, and other removable storage units 1022 and interfaces 1020 that allow software and data to be transferred from the removable storage unit 1018 to computing system 1000.

Computing system 1000 can also include a communications interface 1024. Communications interface 1024 can be used to allow software and data to be transferred between computing system 1000 and external devices. Examples of communications interface 1024 can include a modem, a network interface (such as an Ethernet or other NIC card), a communications port (such as for example, a universal serial bus (USB) port), a PCMCIA slot and card, etc. Software and data transferred via communications interface 1024 are in the form of signals which can be electronic, electromagnetic, and optical or other signals capable of being received by communications interface 1024. These signals are provided to communications interface 1024 via a channel 1028. This channel 1028 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product', 'computer-readable medium' and the like may be used generally to refer to media such as, for example, memory 1008, storage device 1018, or storage unit 1022. These and other forms of computer-readable media may store one or more instructions for use by processor 1004, to cause the processor to perform specified operations. Such instructions, generally referred to as 'computer program code' (which may be grouped in the form of computer programs or other groupings), when executed, enable the computing system 1000 to perform functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 1000 using, for example, removable storage drive 1022, drive 1012 or communications interface 1024. The control logic (in this example, software instructions or computer program code), when executed by the processor 1004, causes the processor 1004 to perform the functions of the invention as described herein.

In one example, a tangible non-transitory computer program product comprises executable program code operable for, when executed at the first wireless network element: intercepting a communication from the wireless communication unit to a second network element; decoding the communication to determine whether the communication relates to a request for a first item of information; requesting the first item of information from the data store, wherein the control processor is further arranged to not forward the request for the first item of information to the second network element if it is determined that first item of information is stored in the data store; receiving the first item of information from the data store; and transmitting the first information to the wireless communication unit.

It will be further appreciated that, for clarity purposes, the described embodiments of the invention with reference to different functional units and processors may be modified or re-configured with any suitable distribution of functionality between different functional units or processors is possible, without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Aspects of the invention may be implemented in any suitable form including hardware, software, firmware or any combination of these. The invention may optionally be implemented, at least partly, as computer software running on one or more data processors and/or digital signal processors. For example, the software may reside on non-transitory computer program product comprising executable program code to increase coverage in a wireless communication system.

Thus, the elements and components of an embodiment of the invention may be physically, functionally and logically implemented in any suitable way. Indeed, the functionality may be implemented in a single unit, in a plurality of units or as part of other functional units.

Those skilled in the art will recognize that the functional blocks and/or logic elements herein described may be implemented in an integrated circuit for incorporation into one or more of the communication units. Furthermore, it is intended that boundaries between logic blocks are merely illustrative and that alternative embodiments may merge logic blocks or circuit elements or impose an alternate composition of functionality upon various logic blocks or circuit elements. It is further intended that the architectures depicted herein are merely exemplary, and that in fact many other architectures can be implemented that achieve the same functionality. For example, for clarity the signal processor 308, control processor 414, and additional transceiver circuitry and signal processing logic 330 have been illustrated and described as a single processing module, whereas in other implementations they may comprise separate processing modules or logic blocks.

Although the present invention has been described in connection with some example embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

## Claims

1. A terminal device for communicating in a cellular system, wherein the terminal device comprises:
at least one first transceiver arranged to communicate with a plurality of communication units; and
at least one first signal processor, operably coupled to the at least one first transceiver and arranged to:
communicate with a first communication unit in the cellular system in a first mode of operation when the terminal device is located within a coverage range of at least one base station; and
facilitate in a second mode of operation direct communications between at least one other terminal device and the first communication unit when the at least one other terminal device is located outside of the coverage range of the at least one base station.

2. The terminal device of Claim 1 wherein the first communication unit is the at least one base station.

3. The terminal device of Claim 2 wherein the signal processor of the terminal device is arranged to at least partly function as an access network in the second mode of operation to facilitate direct communications between the at least one other terminal device and the first communication unit.

4. The terminal device of any preceding Claim wherein the first communication unit is at least one further terminal device that is located within a coverage range of the at least one base station.

5. The terminal device of Claim 4 wherein the terminal device and the at least one other terminal device are located outside a coverage range of the at least one base station.

6. The terminal device of any preceding Claim wherein the terminal device comprises at least one from a group of:
a user equipment comprising a translation module arranged to facilitate direct communications in a second mode of operation;
a user equipment operably coupled to a translation module arranged to facilitate direct communications in a second mode of operation.

7. The terminal device of Claim 6 wherein the at least one first transceiver and the at least one first signal processor are arranged to communicate with the first communication unit in the cellular system in a first mode of operation and the translation module comprises a second transceiver operably coupled to the at least one first transceiver and at least one second signal processor operably coupled to the at least one first signal processor and arranged to support communication in the second mode of operation.

8. The terminal device of Claim 7 further comprising an antenna and at least one switch arranged to perform at least one from a group of:
operably couple the antenna to the second signal processing logic of the translation module in a receive mode when the terminal device transitions to the second mode of operation;
operably couple the antenna to the first transceiver of the terminal device in a transmit mode when the terminal device transitions to the second mode of operation.

9. The terminal device of any of preceding Claims 7 to 8 wherein, in a receive mode, a portion of the receive and process operation of signals from the at least one other terminal device is performed in both the user equipment and the translation module in the second mode of operation.

10. The terminal device of any preceding Claim wherein the terminal device is arranged to continue in the second mode of operation with direct communications with the at least one other terminal device located outside of the coverage range of the at least one base station until a communication session is finished with the at least one other terminal device.

11. The terminal device of Claim 10 wherein the second signal processor determines whether the communication session with the at least one other terminal device is finished and in response to the communication session being finished, the terminal device switches to the first mode of operation and attempts access to the at least one base station.

12. The terminal device of any of preceding Claims 6 to 11 wherein the translation module is configured to support a subset of evolved packet core (EPC) network functionality including at least one from a group of: Mobility Management Entity (MME), Serving gateway (S-GW), packet data network gateway (PDN-GW) functionality.

13. The terminal device of Claim 12 wherein the translation module is configured to perform at least one from a group of:
facilitate at least one from a group of: registration, authentication, management of idle-connected states, routing of use plane data to the at least one other terminal device;
terminate a non-access stratum (NAS) protocol message;
use security functionality in communications with the at least one other terminal device;
support a subset of call session control functions (CSCF) to utilise internet protocol (IP) Multimedia Subsystem (IMS) protocols to perform multimedia call control with the at least one other terminal device;
pre-configured with IMS context information for the at least one other terminal device track at least one from a group of:
a location of the at least one other terminal device in an evolved packet system (EPS) Connection Management ECM-CONNECTED state;
a presence of the at least one other terminal device in an evolved packet system (EPS) Connection Management ECM-IDLE state;
a presence of the at least one other terminal device that is linked with an invocation of a presence notification procedure at the translation module from the at least one other terminal device.

14. An integrated circuit for a terminal device for communicating in a cellular system, wherein the integrated circuit comprises:
transceiver logic arranged to communicate with a plurality of communication units; and
signal processing logic, operably coupled to the transceiver logic and arranged to:
communicate with a first communication unit in the cellular system in a first mode of operation when the terminal device is located within a coverage range of the at least one base station; and
facilitate in a second mode of operation direct communications between at least one other terminal device and the first communication unit when the at least one other terminal device is located outside of the coverage range of the at least one base station.

15. A method for communicating in a cellular system, wherein the method comprises, at a terminal device:
monitoring network coverage of the terminal device;
determining whether the terminal device is currently located within a coverage range of at least one first base station and communicating with a first communication unit in the cellular system in a first mode of operation when the terminal device is located within a coverage range of the at least one base station;
determining whether at least one other terminal device is currently located outside a coverage range of the at least one base station and in response thereto facilitating in a second mode of operation direct communications between the at least one other terminal device and the first communication unit.
